Europäisches Patentamt

European Patent Office

Office européen des brevets

(19)

(11)  **EP 1 691 514 A1**

(12)  **EUROPEAN PATENT APPLICATION**

(43)  Date of publication:
   **16.08.2006  Bulletin 2006/33**

(51)  Int Cl.:
   *H04L 12/56* (2006.01)

(21)  Application number: **06100610.2**

(22)  Date of filing: **19.01.2006**

(84)  Designated Contracting States:
   **AT BE BG CH CY CZ DE DK EE ES FI FR GB GR
   HU IE IS IT LI LT LU LV MC NL PL PT RO SE SI
   SK TR**
   Designated Extension States:
   **AL BA HR MK YU**

(30)  Priority: **11.02.2005  US 56058**

(71)  Applicant: **Microsoft Corporation
   Redmond WA 98052 (US)**

(72)  Inventors:
   • **Virdi, Gurpratap
    98052, Redmond (US)**

   • **Davis, Jeffrey A.
    98052, Redmond (US)**
   • **Bowra, Todd
    98052, Redmond (US)**

(74)  Representative: **Zimmer, Franz-Josef
   Grünecker, Kinkeldey,
   Stockmair & Schwanhäusser
   Anwaltssozietät
   Maximilianstrasse 58
   80538 München (DE)**

(54)  **Detecting clock drift in networked devices through monitoring client buffer fullness**

(57)    A digital media system (100) uses client buffer fullness reports (210) to detect clock drift between a clock on a host/source device (102,202) that delivers streaming media content and a clock on a client playback device (104,204) that receives the streaming media content. The system provides a reduction in playback interruptions during playback of streaming media content and a greater potential that "live" content encoded by a host/source device can actually be experienced as "live" content through playback on a client device.

*Fig. 2*

EP 1 691 514 A1

**Description**

## TECHNICAL FIELD

The present disclosure generally relates to digital media playback systems, and more particularly to regulating the playback of media streams in such systems.

## BACKGROUND

Digital media streaming, such as the streaming of audio, video, and/or text media content is becoming increasingly popular. The term "streaming" is typically used to indicate that the data representing the media is provided by a host computer device over a network to a client device (i.e., a media playback device implemented as any of a variety of conventional computing devices, such as a desktop PC, a notebook or portable computer, a cellular telephone or other wireless communications device, a personal digital assistant (PDA), a gaming console, an IP set-top box, a handheld PC, and so on). The client device renders the streaming content as the content is received from the host, rather than waiting for all the content or the entire "file" to be delivered.

When media content is "streamed" over a network, it is typically streamed in data packets. However, there is not always a guarantee that the data packets will arrive at their destination in the same order in which they are sent, or even that they will arrive at their destination at all. Additionally, there is usually no guarantee that the time it takes a data packet to travel from the source to the destination will be of specific duration, or that the time will be the same for different data packets.

In order to account for these variances in data delivery to a client device, the client device typically maintains a buffer of data. The buffer allows the client device to smooth out the variances in data delivery so that they are not as noticeable to the user during playback of the content. Thus, for example, if there is a brief glitch in network bandwidth caused by network congestion (e.g., network cross-traffic, interference, poor wireless reception), in most cases the amount of data in the buffer permits the client device to continue playing media content so the user does not experience the effects of the glitch (e.g., an interruption or pause in playback). However, in some cases variances in data delivery caused by a network glitch, for example, can deplete the buffer and result in an interruption or pause in playback.

Another problem that can cause the continual depletion of the client buffer and periodic interruption in playback in media content is the presence of different clock frequencies on the host device (i.e., the source device that encodes and transmits the streaming content) and the client device (i.e., the device that receives and plays back the streaming content). That is, the client clock regulating playback on the client device may run at a slightly different frequency than the host clock regulating the encoding process on the host/source device. Clock drift between the host clock and the client clock can cause the client buffer to run out of media content for playback. If the client clock runs faster than the host clock, the client will consume media content from the client buffer at a slightly faster rate than the host can replenish it. In this case, the client buffer will continually run out of media content and a periodic pause or interruption in media playback occurs in order for the buffer to recover. Conversely, clock drift can also cause the client buffer to overflow with media content. If the client clock runs slower than the host clock, the client will consume media content from the client buffer at a slightly slower rate than the host is filling the buffer. In this case, the client buffer will overflow with media content.

Accordingly, a need exists for a way to detect clock drift between a host device delivering streaming content to a client playback device, and the client device.

## SUMMARY

A digital media system and methods use client buffer fullness reports to detect clock drift between the clock on a host/source device that delivers streaming media content and the clock on a client playback device that receives the streaming media content.

In one embodiment, a buffer monitor on the client device monitors a client buffer and generates buffer fullness reports that indicate the level of data in the client buffer. The buffer monitor sends the buffer fullness reports to a clock drift detection and recovery component on the host device. The clock drift detection and recovery component determines from the buffer fullness reports the extent of any clock drift between the client device clock and the host device clock. If there is clock drift between the client clock and host clock, the clock drift detection and recovery component implements a recovery method to synchronize the clocks.

In another embodiment, the buffer monitor on the client device sends the buffer fullness reports to a clock drift detection and recovery component on the client device. The clock drift detection and recovery component on the client device determines the extent of any clock drift between the client clock and the host clock and implements a recovery method on the client device to synchronize the clocks. In still another embodiment, the clock drift detection and recovery component on the client device sends a message to the host device regarding detected clock drift, and a clock recovery component on the host device implements a recovery method to synchronize the clocks. The clock drift detection and recovery component may also reside on a third device (e.g., a dedicated control device) and receive buffer fullness reports from the client. Again, the clock drift detection and recovery component determines the extent of any clock drift between the client clock and the host clock and can implement a recovery method to synchronize the clocks.

## BRIEF DESCRIPTION OF THE DRAWINGS

The same reference numerals are used throughout the drawings to reference like components and features.

Fig. 1 illustrates an exemplary environment suitable for detecting clock drift between the clock on a host/source device that delivers streaming media content and the clock on a client playback device that receives the streaming media content.
Fig. 2 illustrates an exemplary embodiment of a digital media system suitable for detecting clock drift between the clock on a host/source device that delivers streaming media content and the clock on a client playback device that receives the streaming media content.
Fig. 3 illustrates scenarios showing what client media buffer fullness levels might look like over time as a host device streams media content to a client device.
Fig. 4 illustrates an additional scenario showing what client media buffer fullness levels might look like where the buffer fullness level fluctuates over time due to network bandwidth fluctuations.
Fig. 5 illustrates additional exemplary embodiments of a digital media system suitable for detecting clock drift between the clock on a host device that delivers streaming media content and the clock on a client playback device that receives the streaming media content.
Figs. 6-7 are flow diagrams illustrating exemplary methods for detecting clock drift in a digital media system between the clock on a host/source device that delivers streaming media content and the clock on a client playback device that receives the streaming media content.
Fig. 8 illustrates an exemplary computing environment suitable for implementing a host computer device and client playback device such as those discussed with reference to Figs. 1-7.

## DETAILED DESCRIPTION

### Introduction

The following discussion is directed to a digital media system and methods that detect clock drift between the clock on a host/source device that delivers streaming media content and the clock on a client playback device that receives the streaming media content. The host clock regulates the encoding of the streaming media on the host device and the client clock regulates the playback of the streaming media on the client device. Advantages of the described system and methods include a reduction in playback interruptions during playback of streaming media content and a greater potential that "live" content encoded by a host/source device can actually be experienced as "live" content through playback on a client device.

### Exemplary Environment

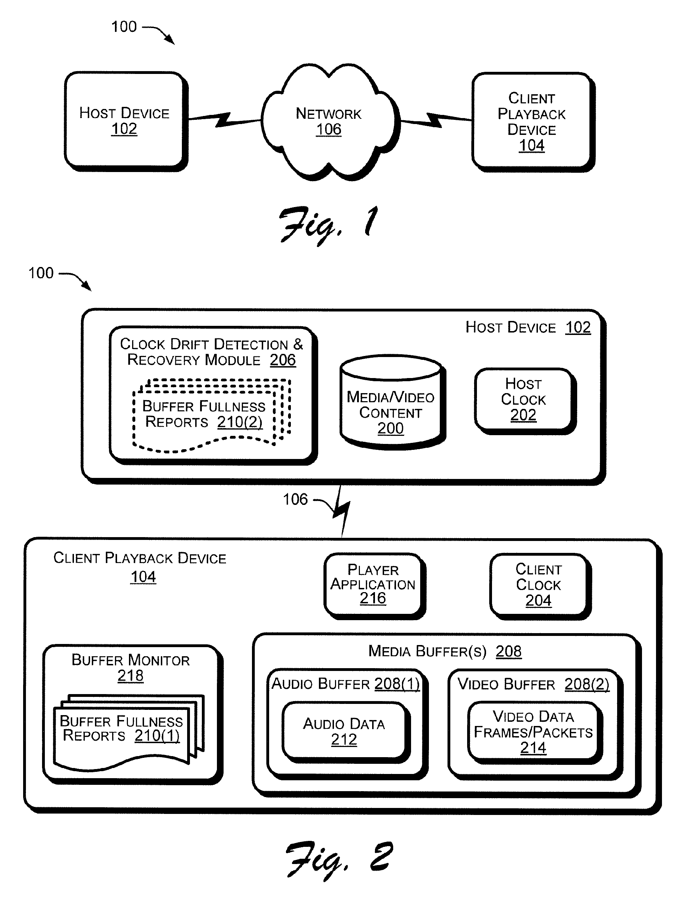

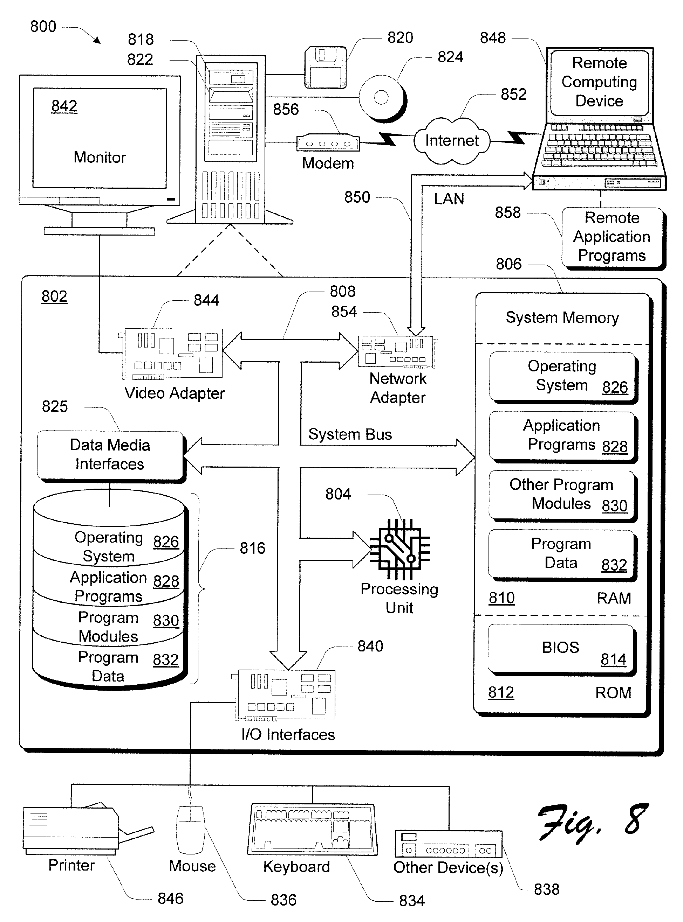

Fig. 1 illustrates an exemplary environment 100 suitable for detecting clock drift between the clock on a host/source device that delivers streaming media content and the clock on a client playback device that receives the streaming media content. Network 106 is intended to represent any of a variety of conventional network topologies and types (including optical, wired and/or wireless networks), employing any of a variety of conventional network protocols (including public and/or proprietary protocols). Network 106 may include, for example, a home network, a corporate network, or the Internet, as well as possibly at least portions of one or more local area networks (LANs) and/or wide area networks (WANs).
A host/source device 102 generally provides access to stored media content, such as media files, and/or live media content, such as a live cable TV feed or Webcast. Host device 102 streams the media content to a client playback device 104 upon request. A client device 104 generally receives streaming media content from host device 102 and plays it back for a user. Requests from client device 104 for streaming media content that is available on host device 102 are routed from the client device 104 to the host device 102 via network 106. The host device 102 receives the request and returns the requested content to the requesting client device 104 via network 106.
Host device 102 may be implemented as any of a variety of conventional computing devices, including, for example, a desktop PC, a notebook or portable computer, a workstation, a mainframe computer, an Internet appliance, combinations thereof, and so on, that are configurable to stream stored and/or live media content to a client device 104. Client playback device 104 may also be implemented as any of a variety of conventional computing devices, including, for example, a desktop PC, a notebook or portable computer, a workstation, a mainframe computer, an Internet appliance, a gaming console, a handheld PC, a cellular telephone or other wireless communications device, a personal digital assistant (PDA), a set-top box, combinations thereof, and so on. An exemplary computing environment for implementing a host device 102 and a client device 104 is described in more detail herein below with reference to Fig. 8.

Host device 102 can make any of a variety of data available for streaming to client playback device 104, including content such as audio, video, text, images, animation, and the like. However, as used herein with respect to the exemplary embodiments described below, media content 200 is intended to represent audio/video (A/V) content or just video content. Furthermore, references made herein to "media content", "streaming media", "streaming video", "video content", and any variation thereof are generally intended to include audio/video content. The term "streaming" is used to indicate that the data representing the media content is provided over a network 106 to a client playback device 104 and that playback of the content can begin prior to the content being delivered in its entirety. The data may be publicly available or alternatively restricted (e.g., restricted to only certain users, available only if the appropriate fee is paid, restricted to users having access to a particular network, etc.). Additionally, the data may be "on-demand" (e.g., pre-recorded, stored content of a known size) or alternatively from a live "broadcast" (e.g., having no known size, such as a digital representation of a concert being captured as the concert is performed and made available for streaming shortly after capture).

**Exemplary Embodiments**

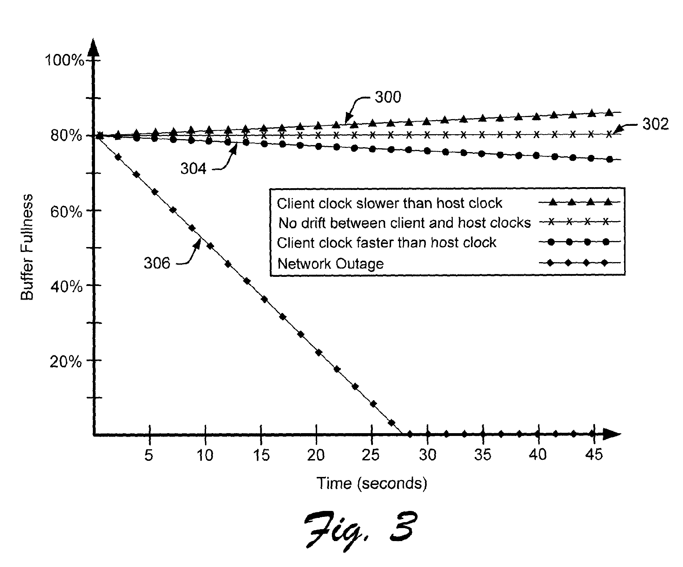

Fig. 2 illustrates an exemplary embodiment of a digital media system suitable for detecting clock drift between the clock on a host/source device 102 that delivers streaming media content and the clock on a client playback device 104 that receives the streaming media content. Host device 102 is generally configured to encode media/video content 200 at a rate regulated by the host clock 202 of host device 102. Host device 102 may then store and/or stream the encoded media/video content 200 over a network 106 to client device 104. Client device 104 is generally configured to receive streaming media/video content 200 and play back the streaming content at a rate regulated by the client clock 204 of client device 104.

In the present embodiment, host device 102 includes a clock drift detection and recovery module 206 configured to determine if there is clock drift between the client clock 204 and the host clock 202. The detection and recovery module 206 determines clock drift based on information it receives from client device 104 regarding the client media buffer(s) 208. Client device 104 provides the buffer information to host device 102 in the form of buffer fullness reports 210. Buffer fullness reports 210 indicate the level of data present in client media buffer(s) 208 on client device 104 during the streaming of media content 200 from the host device 102 to the client device 104. The level of data indicated by the buffer fullness reports 210 can include the level of audio data 212 in an audio buffer 208(1) and/or the level of video data 214 in a video buffer 208(2). The clock drift detection and recovery module 206 on host device 102 determines clock drift based on buffer fullness reports 210(2) it receives from client device 104 as discussed in greater detail herein below.

Host device 102 maintains one or more files of media content 200 from which a selection can be made by a media player application 216 on client device 104 (e.g., in response to user input through the media player application 216). In addition, host device 102 provides access to live content such as from a live cable TV feed or Webcast that it streams to client playback device 104 upon request. In the present embodiment, media content 200 is to be considered video content that typically has an audio component. Thus, as indicated above, references made herein to "media content", "streaming media", "streaming video", "video content", and any variation thereof are generally intended to mean audio/video (A/V) and/or video content. Host device 102 transmits requested media content 200 as a stream of data over network 106 to media player application 216 on client device 104.

Client device 104 maintains media buffer(s) 208 as a way to smooth out variances in data delivery over network 106 (e.g., network glitches caused by network cross-traffic, interference, poor wireless reception, etc.), so that they are not as noticeable to the user during playback of the content. Under favorable network conditions, the buffer(s) 208 fullness level would be relatively high (e.g., >80% full) and would indicate a healthy fullness level. A high fullness level in the buffer(s) 208 generally permits real time playback of all the media content within the buffer(s) 208 as well as the remaining streaming media content from host device 102.

Buffer monitor 218 on client device 104 is configured to monitor the fullness level of buffer(s) 208 and to generate buffer fullness reports 210(1) while media content 200 is being streamed from host device 102. The buffer fullness reports 210 are a mechanism by which the client device 104 reports buffer fullness information to the host device 102. In general, this information is used by the clock drift detection and recovery module 206 on host device 102 to determine if there is clock drift between the client clock 204 and the host clock 202.

Fig. 3 illustrates four scenarios showing what the client media buffer 208 fullness levels might look like over time as host device 102 streams media content to client device 104. In each scenario, the buffer 208 starts out at a relatively high or healthy fullness level of approximately 80%. In a first scenario, demonstrated by plotted line 300, the buffer fullness level gradually increases over time. This indicates that data in the buffer 208 is being replenished faster than it is being consumed. In this scenario the buffer 208 will eventually overflow with data, which typically results in overflow data (frames) either being discarded/dropped by the client 104 and not played back or stored in a host buffer (not shown) on the host device 102. In a second scenario, demonstrated by plotted line 302, the buffer fullness level remains the same over time. This indicates that the data in the buffer 208 is being replenished at the same rate that it is being consumed. In a third scenario, demonstrated by plotted line 304, the buffer fullness level gradually decreases over time. This indicates that data in the buffer 208 is being replenished more slowly than it is being consumed. In the third scenario the buffer 208 will eventually be depleted, and a pause or interruption will occur in media playback on the client device 104 while the buffer 208 is recovered (i.e., replenished with data). In a fourth scenario, demonstrated by plotted line 306, the buffer fullness drops quickly over time, indicating that data in the buffer 208 is being replenished at a much slower rate than it is being consumed.

In order to determine if there is clock drift between the client clock 204 and the host clock 202, the clock drift detection and recovery module 206 on host device 102 receives buffer fullness reports 210(2) generated by buffer monitor 218 on client device 104 and plots the buffer fullness levels over time as indicated in the buffer fullness reports 210(2). Thus, the clock drift detection and recovery module 206 may generate plots such as those illustrated and discussed above with respect to Fig. 3. The clock drift detection and recovery module 206 monitors the slopes of the lines generated by the plots to determine if clock drift is present between the client clock 204 and the host clock 202. In general, a gradually sloping line, either positively or negatively sloped, indicates that clock drift is present between the client clock 204 and the host clock 202. As discussed in more detail below, the slope is averaged over time to smooth out network jitter.

Referring again to Fig. 3, for example, while plotting a line such as line 300, the clock drift detection and recovery module 206 would determine that the line 300 has a gradual slope, indicating the presence of clock drift between the client clock 204 and the host clock 202. Furthermore, because the slope of the line 300 is positive, the clock drift detection and recovery module 206 determines that the client clock 204 is running at a slower rate than the host clock 202, since the data in buffer 208 is being consumed (i.e., is being played back by a player application 216 on client 104) at a slower rate than the host device 102 (regulated by host clock 202) is replenishing the data. Likewise, for other plots generated from buffer fullness reports 210(2), the detection and recovery module 206 would determine from the slopes of the lines plotted whether any clock drift was present between the client clock 204 and the host clock 202. For example, with respect to line 302 of Fig. 3, the detection and recovery module 206 would determine that there is no clock drift because the slope of the line 302 is zero. With respect to line 304, the detection and recovery module 206 would determine from the gradual negative slope of the line that clock drift was present and that the client clock 104 was running at a faster rate than the host clock 202, since the date in buffer 208 is being consumed at a faster rate than the host device 102 is replenishing the data. With respect to line 306, the detection and recovery module 206 would determine from the dramatic negative slope in line 306 that there is a circumstance beyond mere clock drift, such as a network outage, that is causing a rapid depletion of the client buffer 208. A network outage can be differentiated from clock drift because the rate of incoming media content from the network goes to zero for a network outage while likely remaining constant, on average, when a network outage does not exist. In addition, during network congestion the flow of media content may become slower but not drop completely to zero. For example, if network capacity is lower than the stream bit-rate (e.g., if an attempt is made to send a 6 mbps stream over a 5.5 mbps network), buffer fullness on the client device 104 can also deplete over time. Monitoring additional statistics such as the number of retransmitted/lost packets at the network level, the variation in round trip time over time, or other statistics can identify such a network overload. Buffer depletion results that are determined to be a result of network limitations can therefore be filtered out when determining if clock drift is present between the host clock and the client clock.

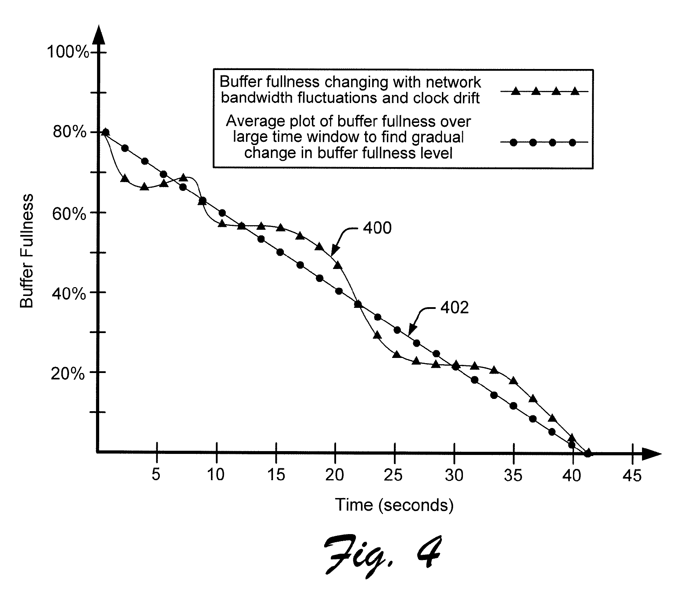

Fig. 4 illustrates an additional scenario in which the buffer fullness level fluctuates over time due to network bandwidth fluctuations, as illustrated by plotted line 400. In this scenario, the buffer fullness may not appear to cleanly increase or decrease over time. However, the network bandwidth fluctuations can be filtered out by averaging the buffer fullness over a large time window and plotting the result (e.g., plotted line 402). The detection and recovery module 206 can then calculate the slope of the plotted line 402 and determine that the buffer fullness is in fact decreasing at a constant rate. Therefore, as noted above, the detection and recovery module 206 determines from the gradual negative slope of line 402 that clock drift is present and that the client clock 104 is running at a faster rate than the host clock 202.

In addition to determining whether clock drift is present between the client clock 204 and the host clock 202, the detection and recovery module 206 calculates the difference in clock speed between the host clock 202 and client clock 204. Various mathematical models (e.g., mathematical low pass filtering, statistical analysis, etc.) may be useful in calculating the difference in clock speed between the host clock 202 and client clock 204 based on the buffer fullness data from client buffer 208. In one implementation, a difference in clock speed between the host clock 202 and client clock 204 is defined by the following definitions and equations (1), (2), and (3):

$$rh - rc = dpc * (ch - cc) \qquad (1)$$

*ch* is the *actual* rate of the host clock 202 in hertz (Hz).
*cc* is the *actual* rate of the client clock 204 in hertz.
*dpc* is a constant indicating the spec'd (i.e., an *expected* value based on a value that is specified) data rate of the data stream. That is, *dpc* is equal to the spec'ed data rate of both the host device 102 and the client device 104.
*rh* is the *actual* rate of data generation on host device 102, which is the spec'ed data rate (bits/second) * *ch* / spec'ed host clock rate in hertz. Thus:

$$rh = ch * dpc$$

*rc* is the *actual* rate of data consumption on client device 104, which is the spec'ed data rate (bits/second) * cc / spec'ed client clock rate in hertz. Thus:

$$rc = cc * dpc$$

Accordingly, equation (1) above is derived by subtracting *rc* from *rh.* Equation (1) can alternatively be expressed with regard to buffer fullness and time by the following definitions and equation (2):

$$rh - rc = (ft - f0) / t \qquad (2)$$

*f0* is the buffer fullness (in bits of data) at time zero, which is the percent of buffer fullness at time zero multiplied by the size of the buffer 208 (in bits).
*ft* is the buffer fullness (in bits of data) at time t, which is the percent of buffer fullness at time t multiplied by the size of the buffer 208 (in bits).
By equating equations (1) and (2) above, the solution for the difference in clock speed (i.e., the amount of clock drift) between the host clock 202 and client clock 204 is apparent as follows in equation (3):

$$dpc * (ch - cc) = (ft - f0) / t$$

$$ch - cc = \frac{ft - f0}{t * dcp} \qquad (3)$$

The values for *ft, f0,* and *t* can be determined from the data used to generate the graph (i.e., from data in the buffer fullness reports 210(2)). The quantity *(ft - f0) / t* is determined from the slope of the line plotted based on the buffer fullness reports 210(2). Thus, the clock drift detection and recovery module 206 can readily calculate the amount of clock drift between the client clock 204 and the host clock 202 based on equation (3) (i.e., the difference in clock speed indicated by the quantity ch - *cc).*
In the above calculations, an assumption is made that, over time, the average network capacity is greater than the bit-rate of the media stream being transmitted by host device 102. If network capacity is lower than the stream bit-rate, buffer fullness on the client device 104 can also deplete over time. Monitoring additional statistics such as the number of retransmitted/lost packets at the network level, the variation in round trip time over time, or other statistics that can identify a network overload, can improve the results noted above for cases in which network capacity may be lower over time than the stream bit-rate.

After determining that there is clock drift between the client clock 204 and the host clock 202 and calculating the amount of the clock drift, the detection and recovery module 206 can implement a recovery method to synchronize the clocks. For example, the host device 102 may send a clock change request to the client 104 instructing the client to speed up or slow down the client clock 204. If the client clock 204 lags behind the host clock 202, the host device 102 may also drop some video frames from the media content 200 streaming to the client 104 in order to catch the client clock 204 back up with the host clock 202. The host device 102 can also adjust its own clock to synchronize the clocks. Synchronizing the client clock 204 and host clock 202 helps to reduce playback interruptions that can occur when the client buffer 208 is depleted as a result of the client clock 202 running at a faster rate than the host clock 202. In addition, synchronizing the client clock 204 and host clock 202 helps to ensure that "live" content being encoded by the host device 102 at the host clock rate can be experienced or played back on the client device 104 as "live" content at the same rate it is encoded on the host device 102.

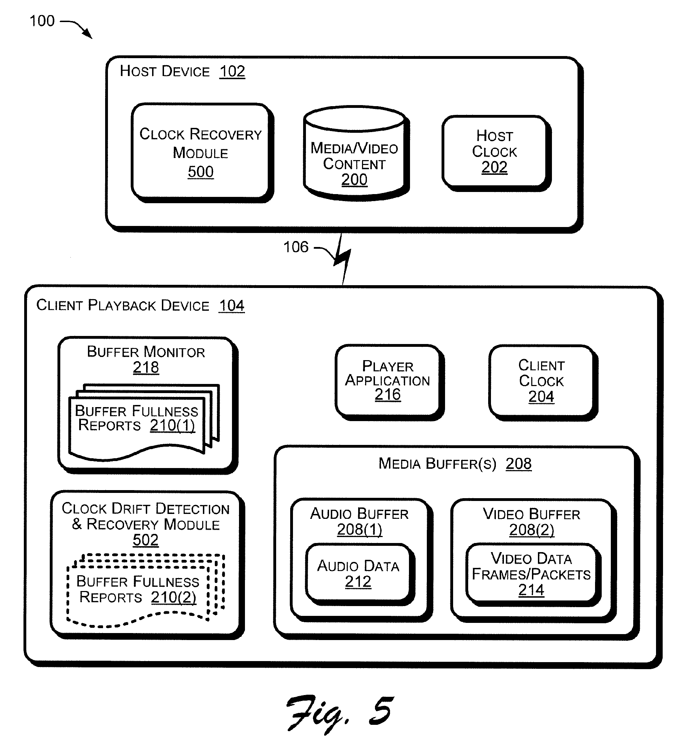

Fig. 5 illustrates one or more additional exemplary embodiments of a digital media system suitable for detecting clock drift between the clock on a host device 102 that delivers streaming media content and the clock on a client playback device 104 that receives the streaming media content. The host device 102 and client device 104 are generally configured as discussed above with respect to the Fig. 2 embodiment. However, in one embodiment of Fig. 5, the client device 104 may be additionally configured with a clock drift detection and recovery module 502 to determine if clock drift exists between the client clock 204 and host clock 202, and to calculate the difference in clock speed between the host clock 202 and client clock 204 in a manner similar to that discussed above. Furthermore, upon detecting clock drift and calculating the difference clock speed between the host clock 202 and client clock 204, the detection and recovery module 502 of client device 104 may implement a clock recovery method (e.g., adjusting the rate of client clock 204 by a certain percentage) to synchronize the client clock 204 with the host clock 202. In another embodiment, host device 102 may include a clock recovery module 500 configured to receive a clock recovery request and/or information from the clock drift detection and recovery module 502 on the client device 104. Upon receiving such request and/or information, the clock recovery module 500 may implement a clock recovery method such as discussed above with regard to the embodiment of Fig. 2.

**Exemplary Methods**

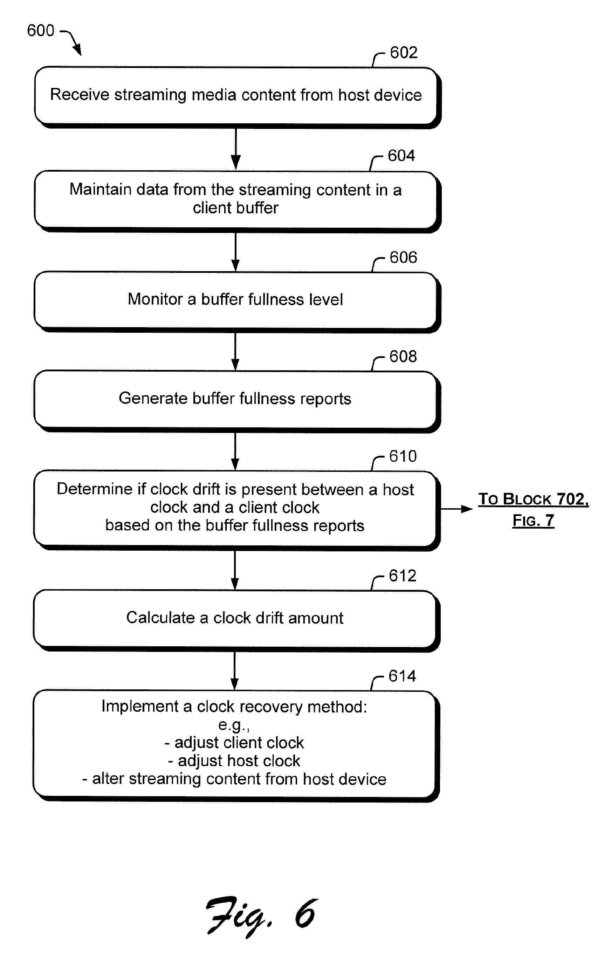

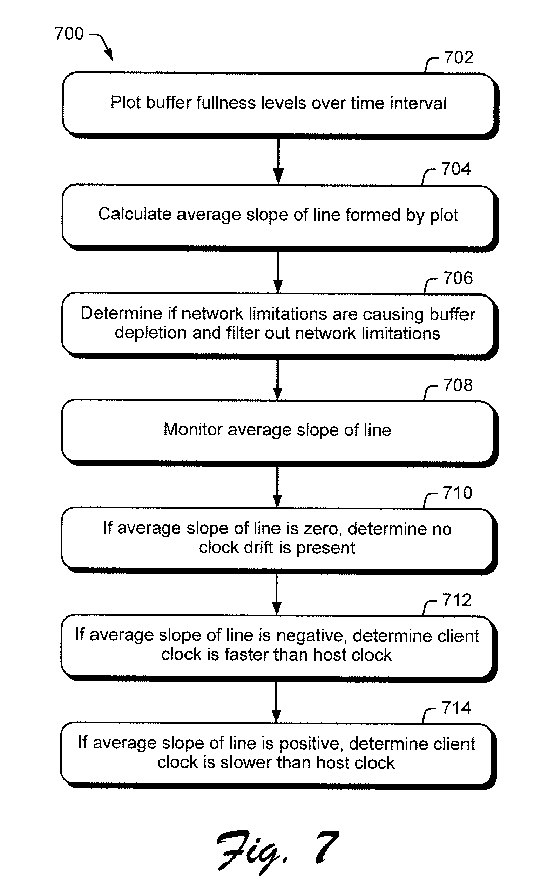

Example methods for detecting clock drift in a digital media system between the clock on a host/source device 102 that delivers streaming media content and the clock on a client playback device 104 that receives the streaming media content will now be described with primary reference to the flow diagrams of Figs. 6 and 7. The methods apply to the exemplary embodiments discussed above with respect to Figs. 1-5. While one or more methods are disclosed by means of flow diagrams and text associated with the blocks of the flow diagrams, it is to be understood that the elements of the described methods do not necessarily have to be performed in the order in which they are presented, and that alternative orders may result in similar advantages. Furthermore, the methods are not exclusive and can be performed alone or in combination with one another. The elements of the described methods may be performed by any appropriate means including, for example, by hardware logic blocks on an ASIC or by the execution of processor-readable instructions defined on a processor-readable medium.

A "processor-readable medium," as used herein, can be any means that can contain, store, communicate, propagate, or transport instructions for use or execution by a processor. A processor-readable medium can be, without limitation, an electronic, magnetic, optical, electromagnetic, infrared, or semiconductor system, apparatus, device, or propagation medium. More specific examples of a processor-readable medium include, among others, an electrical connection (electronic) having one or more wires, a portable computer diskette (magnetic), a random access memory (RAM) (magnetic), a read-only memory (ROM) (magnetic), an erasable programmable-read-only memory (EPROM or Flash memory), an optical fiber (optical), a rewritable compact disc (CD-RW) (optical), and a portable compact disc read-only memory (CDROM) (optical).

At block 602 of method 600, a client playback device 104 receives streaming media content over a network 106 from a host device 102. The media content includes, for example, audio/video and/or video content. At block 604, the client device 104 maintains data from the media content in a client buffer 208. During playback of the streaming media content, the buffer is used to smooth out variances in data delivery due to fluctuations in network bandwidth (e.g., due to network glitches caused by network cross-traffic, interference, poor wireless reception, etc.), so that they are not as noticeable to the user during playback of the content. At block 606, a buffer monitor 218 monitors the fullness level of the data in the buffer 208, and at block 608 buffer fullness reports 210(1) are generated based on the buffer monitoring. Thus as media content streams into the buffer and is consumed by the client playback device 104, buffer fullness reports are generated by the buffer monitor that indicate the amount of data present in the buffer at various times during the content streaming.

At block 610 of method 600, a clock drift detection and recovery module (206, 502) determines if there is clock drift present between the clock on the host device 102 that is regulating the streaming of the media content and the clock on the client device 104 that is regulating the playback of the media content. Method 700, continued on Fig. 7 and discussed below, further describes how clock drift is determined.

At block 612 of method 600, the amount of clock drift is calculated. As discussed herein above, the amount of clock drift is calculated according to the following equation, where *dpc* is a constant, and *ft, f0,* and *t* can be determined from the data used to generate the graph (i.e., from data in the buffer fullness reports 210(2)):

$$ch - cc \; = \; \frac{ft - f0}{t * dcp} \qquad\qquad (3)$$

At block 614 of method 600, the clock drift detection and recovery module (206, 502) or a clock recovery module 500 implement a clock recovery method to synchronize the client clock 204 to the host clock 202. The recovery methods can include, for example, adjusting the client clock, adjusting the host clock, altering the streaming content from the host device (e.g., dropping frames), and so on.

As noted above, method 700 on Fig. 7 further describes how clock drift detection and recovery module (206, 502) determines if there is clock drift present between the host clock and the client clock. At block 702 of method 700, the detection and recovery module (206, 502) plots buffer fullness levels over a time interval during streaming of the media content to the client device 104. At block 704, the average slope of a line formed by the plotting is calculated. Calculating the average slope can include averaging the buffer fullness over a large time window and plotting the result in order to filter out network bandwidth fluctuations that might otherwise indicate changes in buffer fullness levels.

At block 706, the clock drift detection and recovery module (206, 502) determines if there are factors other than clock drift, such as a network limitation, that might be causing the depletion of client buffer(s) 208. For example, if network capacity is lower than the stream bit-rate, buffer fullness on the client device 104 can also deplete over time. Monitoring additional statistics such as the number of retransmitted/lost packets at the network level, the variation in round trip time over time, or other statistics can identify a network overload. Buffer depletion results that are determined to be a result of network limitations can therefore be filtered out when determining if clock drift is present between the host clock and the client clock.

At block 708, the detection and recovery module (206, 502) monitors the average slope of the line to determine if there is clock drift present between the host clock and the client clock. If the average slope of the line is zero, then the detection and recovery module (206, 502) determines there is no clock drift present, as shown at block 710. If the average slope of the line is negative, the detection and recovery module (206, 502) determines that the client clock is faster than the host clock, as shown at block 712. If the average slope of the line is positive, the detection and recovery module (206, 502) determines that the client clock is slower than the host clock, as shown at block 714.

**Exemplary Computing Environment**

Fig. 8 illustrates an exemplary computing environment suitable for implementing computer devices such as a host device 102 and a client playback device 104 as discussed above with reference to Figs. 1-7. Although one specific configuration is shown in Fig. 8, such computing devices may be implemented in other computing configurations.

The computing environment 800 includes a general-purpose computing system in the form of a computer 802. The components of computer 802 may include, but are not limited to, one or more processors or processing units 804, a system memory 806, and a system bus 808 that couples various system components including the processor 804 to the system memory 806.

The system bus 808 represents one or more of any of several types of bus structures, including a memory bus or memory controller, a peripheral bus, an accelerated graphics port, and a processor or local bus using any of a variety of bus architectures. An example of a system bus 808 would be a Peripheral Component Interconnects (PCI) bus, also known as a Mezzanine bus.

Computer 802 includes a variety of computer-readable media. Such media can be any available media that is accessible by computer 802 and includes both volatile and non-volatile media, removable and non-removable media. The system memory 806 includes computer readable media in the form of volatile memory, such as random access memory (RAM) 810, and/or non-volatile memory, such as read only memory (ROM) 812. A basic input/output system (BIOS) 814, containing the basic routines that help to transfer information between elements within computer 802, such as during start-up, is stored in ROM 812. RAM 810 contains data and/or program modules that are immediately accessible to and/or presently operated on by the processing unit 804.

Computer 802 may also include other removable/non-removable, volatile/non-volatile computer storage media. By way of example, Fig. 8 illustrates a hard disk drive 816 for reading from and writing to a non-removable, non-volatile magnetic media (not shown), a magnetic disk drive 818 for reading from and writing to a removable, non-volatile magnetic disk 820 (e.g., a "floppy disk"), and an optical disk drive 822 for reading from and/or writing to a removable, non-volatile optical disk 824 such as a CD-ROM, DVD-ROM, or other optical media. The hard disk drive 816, magnetic disk drive 818, and optical disk drive 822 are each connected to the system bus 808 by one or more data media interfaces 825. Alternatively, the hard disk drive 816, magnetic disk drive 818, and optical disk drive 822 may be connected to the system bus 808 by a SCSI interface (not shown).

The disk drives and their associated computer-readable media provide non-volatile storage of computer readable instructions, data structures, program modules, and other data for computer 802. Although the example illustrates a hard disk 816, a removable magnetic disk 820, and a removable optical disk 824, it is to be appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the exemplary computing system and environment.

Any number of program modules can be stored on the hard disk 816, magnetic disk 820, optical disk 824, ROM 812, and/or RAM 810, including by way of example, an operating system 826, one or more application programs 828, other program modules 830, and program data 832. Each of such operating system 826, one or more application programs 828, other program modules 830, and program data 832 (or some combination thereof) may include an embodiment of a caching scheme for user network access information.

Computer 802 can include a variety of computer/processor readable media identified as communication media. Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

A user can enter commands and information into computer system 802 via input devices such as a keyboard 834 and a pointing device 836 (e.g., a "mouse"). Other input devices 838 (not shown specifically) may include a microphone, joystick, game pad, satellite dish, serial port, scanner, and/or the like. These and other input devices are connected to the processing unit 804 via input/output interfaces 840 that are coupled to the system bus 808, but may be connected by other interface and bus structures, such as a parallel port, game port, or a universal serial bus (USB).

A monitor 842 or other type of display device may also be connected to the system bus 808 via an interface, such as a video adapter 844. In addition to the monitor 842, other output peripheral devices may include components such as speakers (not shown) and a printer 846 which can be connected to computer 802 via the input/output interfaces 840.

Computer 802 may operate in a networked environment using logical connections to one or more remote computers, such as a remote computing device 848. By way of example, the remote computing device 848 can be a personal computer, portable computer, a server, a router, a network computer, a peer device or other common network node, and the like. The remote computing device 848 is illustrated as a portable computer that may include many or all of the elements and features described herein relative to computer system 802.

Logical connections between computer 802 and the remote computer 848 are depicted as a local area network (LAN) 850 and a general wide area network (WAN) 852. Such networking environments are commonplace in offices, enterprise-wide computer networks, intranets, and the Internet. When implemented in a LAN networking environment, the computer 802 is connected to a local network 850 via a network interface or adapter 854. When implemented in a WAN networking environment, the computer 802 includes a modem 856 or other means for establishing communications over the wide network 852. The modem 856, which can be internal or external to computer 802, can be connected to the system bus 808 via the input/output interfaces 840 or other appropriate mechanisms. It is to be appreciated that the illustrated network connections are exemplary and that other means of establishing communication link(s) between the computers 802 and 848 can be employed.

In a networked environment, such as that illustrated with computing environment 800, program modules depicted relative to the computer 802, or portions thereof, may be stored in a remote memory storage device. By way of example, remote application programs 858 reside on a memory device of remote computer 848. For purposes of illustration, application programs and other executable program components, such as the operating system, are illustrated herein as discrete blocks, although it is recognized that such programs and components reside at various times in different storage components of the computer system 802, and are executed by the data processor(s) of the computer.

## Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1.  A method comprising:

    receiving streaming content from a host device;
    maintaining data from the streaming content in a client device buffer;
    monitoring a buffer fullness level that reflects a level of data in the buffer; and
    based on the monitoring, determining if there is clock drift between a host clock and a client clock.

2.  A method as recited in claim 1, wherein the determining comprises:

    plotting buffer fullness levels over a time interval;
    calculating an average slope of a line formed by the plotting; and
    monitoring the average slope of the line.

3.  A method as recited in claim 2, wherein the average slope of the line is zero, and the determining comprises determining that there is no clock drift between the host clock and the client clock.

4.  A method as recited in claim 2, wherein the average slope of the line is negative, and the determining comprises determining that the client clock is faster than the host clock.

5.  A method as recited in claim 2, wherein the average slope of the line is positive, and the determining comprises determining that the client clock is slower than the host clock.

6.  A method as recited in claim 2, wherein calculating an average slope of a line comprises filtering out bandwidth fluctuations of a network over which the streaming content is transmitted.

7.  A method as recited in claim 1, wherein the monitoring and the determining are performed on the host device and the monitoring comprises sending buffer fullness level reports to the host device from the client device.

8.  A method as recited in claim 1, wherein the determining comprises notifying the host device if there is clock drift between the host clock and the client clock, and the monitoring and the determining are performed on a device selected from the group comprising:

    the client device; and
    a third device other than the host device and the client device.

9.  A method as recited in claim 1, further comprising calculating a clock drift amount in accordance with

$$ ch - cc \ = \ \frac{ft - f0}{t * dcp} $$

    wherein:

    the clock drift amount is equal to *ch - cc;*
    *ch* is the frequency of the host clock;
    cc is the frequency of the client clock;
    *dpc* is a specified data generation rate on the host device in bits per second;

*f0* is the buffer fullness level at time 0; and
*ft* is the buffer fullness level at time t.

10. A method as recited in claim 1, further comprising implementing a clock recovery method to eliminate the clock drift between the host clock and the client clock.

11. A method as recited in claim 10 wherein the implementing is selected from the group comprising:

adjusting the client clock;
adjusting the host clock;
altering the streaming content from the host device; and
dropping data frames on the client device.

12. A processor-readable medium comprising processor-executable instructions configured for:

transmitting streaming content from a host device to a client device;
monitoring a buffer fullness level of a data buffer on the client device over a measured time interval; and
based on the monitoring, determining if clock drift is present between a host clock on the host device and a client clock on the client device.

13. A processor-readable medium as recited in claim 12, wherein the determining comprises:

calculating a rate of change in the buffer fullness level over the measured time interval; and
based on the rate of change in the buffer fullness level, determining that the clock drift is present.

14. A processor-readable medium as recited in claim 13, wherein the rate of change in the buffer fullness level is a constant positive rate of change, and the determining that the clock drift is present comprises determining that the client clock is operating at a lower frequency than the host clock.

15. A processor-readable medium as recited in claim 13, wherein the rate of change in the buffer fullness level is a constant negative rate of change, and the determining that the clock drift is present comprises determining that the client clock is operating at a higher frequency than the host clock.

16. A processor-readable medium as recited in claim 13, having further processor-executable instructions configured for calculating an amount of clock drift based on the rate of change in the buffer fullness level.

17. A processor-readable medium as recited in claim 16, wherein the amount of clock drift is calculated in accordance with

$$ ch - cc \; = \; \frac{ft - f0}{t * dcp} $$

wherein:

the amount of clock drift is equal to *ch - cc;*
*ch* is the frequency of the host clock;
cc is the frequency of the client clock;
*dpc* is a specified data generation rate on the host device in bits per second;
*f0* is the buffer fullness level at time *0*; and
*ft* is the buffer fullness level at time t.

18. A system comprising:

a client device configured for receiving media content from a host device and for playing back the media content;
a buffer monitor on the client device configured for monitoring a client buffer and generating buffer fullness reports indicating amounts of data in the client buffer; and

a clock drift detection and recovery module configured to determine from the buffer fullness reports if clock drift is present between a host clock and a client clock.

**19.** A system as recited in claim 18, wherein the clock drift detection and recovery module is configured on the host device to receive the buffer fullness reports from the buffer monitor and implement a recovery method to correct the clock drift.

**20.** A system as recited in claim 18, further comprising a clock recovery module on the host device, wherein the clock drift detection and recovery module is further configured to send clock drift information to the clock recovery module and the clock recovery module is configured to implement a recovery method to correct the clock drift.

100 —➘

HOST DEVICE
102

NETWORK
106

CLIENT
PLAYBACK
DEVICE
104

*Fig. 1*

100 —➘

HOST DEVICE  102

CLOCK DRIFT DETECTION &
RECOVERY MODULE  206

BUFFER FULLNESS
REPORTS  210(2)

MEDIA/VIDEO
CONTENT
200

HOST
CLOCK
202

106 —➘

CLIENT PLAYBACK DEVICE
104

PLAYER
APPLICATION
216

CLIENT
CLOCK
204

BUFFER MONITOR
218

BUFFER FULLNESS
REPORTS  210(1)

MEDIA BUFFER(S)  208

AUDIO BUFFER 208(1)

AUDIO DATA
212

VIDEO BUFFER  208(2)

VIDEO DATA
FRAMES/PACKETS
214

*Fig. 2*

*Fig. 3*

Time (seconds)

*Fig. 4*

100 —

**HOST DEVICE  102**

CLOCK RECOVERY MODULE **500**

MEDIA/VIDEO CONTENT **200**

HOST CLOCK **202**

106 —

**CLIENT PLAYBACK DEVICE  104**

BUFFER MONITOR **218**

BUFFER FULLNESS REPORTS **210(1)**

PLAYER APPLICATION **216**

CLIENT CLOCK **204**

CLOCK DRIFT DETECTION & RECOVERY MODULE **502**

BUFFER FULLNESS REPORTS **210(2)**

MEDIA BUFFER(S) **208**

AUDIO BUFFER **208(1)**

AUDIO DATA **212**

VIDEO BUFFER **208(2)**

VIDEO DATA FRAMES/PACKETS **214**

*Fig. 5*

600 ┐

602

Receive streaming media content from host device

604

Maintain data from the streaming content in a client buffer

606

Monitor a buffer fullness level

608

Generate buffer fullness reports

610

Determine if clock drift is present between a host clock and a client clock based on the buffer fullness reports

→ **TO BLOCK 702, FIG. 7**

612

Calculate a clock drift amount

614

Implement a clock recovery method:
e.g.,
- adjust client clock
- adjust host clock
- alter streaming content from host device

*Fig. 6*

700

702

Plot buffer fullness levels over time interval

704

Calculate average slope of line formed by plot

706

Determine if network limitations are causing buffer depletion and filter out network limitations

708

Monitor average slope of line

710

If average slope of line is zero, determine no clock drift is present

712

If average slope of line is negative, determine client clock is faster than host clock

714

If average slope of line is positive, determine client clock is slower than host clock

*Fig. 7*

800

818
822

848

Remote
Computing
Device

820

824

852

842

Monitor

856

Modem

Internet

Remote
Application
Programs

850

LAN

858

806

802

844

808
854

Video Adapter

Network
Adapter

System Memory

Operating
System    826

Application
Programs  828

Other Program
Modules   830

825

Data Media
Interfaces

System Bus

816

804

Processing
Unit

Operating    826
System

Application  828
Programs

Program      830
Modules

Program      832
Data

Program
Data      832

810         RAM

BIOS
          814

812         ROM

840

I/O Interfaces

Printer

Mouse

Keyboard

Other Device(s)

*Fig. 8*

846

836

834

838

**European Patent Office**

# EUROPEAN SEARCH REPORT

Application Number

EP 06 10 0610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 844 891 A (COX ET AL) 1 December 1998 (1998-12-01) | 1-6,9-18 | H04L12/56 |
| Y | * column 3, lines 31-45 * | 7,8,19, 20 | |
| | * column 5, line 8 - column 6, line 42; figure 1 * * column 6, line 60 * ----- | | |
| Y | US 2003/067872 A1 (HARRELL CHANDLEE ET AL) 10 April 2003 (2003-04-10) * paragraphs [0014] - [0016] * * paragraphs [0037] - [0039]; figure 2 * ----- | 7,8,19, 20 | |
| X | EP 0 987 894 A (VICTOR COMPANY OF JAPAN, LTD) 22 March 2000 (2000-03-22) * paragraphs [0016] - [0022]; figures 1,2 * ----- | 1,12,18 | |
| X | CASTEL-BRANCO L ET AL: "Clock recovery for circuit emulation services over ATM" BROADBAND COMMUNICATIONS. GLOBAL INFRASTRUCTURE FOR THE INFORMATION AGE. PROCEEDINGS OF THE INTERNATIONAL IFIP-IEEE CONFERENCE ON BROADBAND COMMUNICATIONS, CANADA, 1996, LONDON, CHAPMAN AND HALL, GB, 23 April 1996 (1996-04-23), pages 617-625, XP010525757 ISBN: 0-412-75970-5 | 1,12,18 | |
| A | Chapters 2-6 ----- | 1-20 | |

TECHNICAL FIELDS SEARCHED (IPC)

H04L

The present search report has been drawn up for all claims

| Place of search | Date of completion of the search | Examiner |
|---|---|---|
| Munich | 17 February 2006 | Kreppel, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 06 10 0610

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2006

| Patent document cited in search report | | Publication date | Patent family member(s) | | Publication date |
|---|---|---|---|---|---|
| US 5844891 | A | 01-12-1998 | AU | 700007 B2 | 17-12-1998 |
| | | | AU | 2520495 A | 21-12-1995 |
| | | | CA | 2191425 A1 | 07-12-1995 |
| | | | WO | 9533320 A1 | 07-12-1995 |
| | | | EP | 0763292 A1 | 19-03-1997 |
| | | | JP | 10500826 T | 20-01-1998 |
| US 2003067872 | A1 | 10-04-2003 | NONE | | |
| EP 0987894 | A | 22-03-2000 | DE | 69915201 D1 | 08-04-2004 |
| | | | DE | 69915201 T2 | 13-01-2005 |
| | | | JP | 2000092130 A | 31-03-2000 |
| | | | SG | 71835 A1 | 18-04-2000 |

EPO FORM P0459

For more details about this annex : see Official Journal of the European Patent Office, No. 12/82